# EUROPEAN PATENT APPLICATION

(11) **EP 4 648 304 A1**
(43) Date of publication of application: **12.11.2025**
(21) Application number: 23917057.4
(22) Date of filing: 18.09.2023
(51) Int. Cl.: H04B 7/06, H04W 64/00

(54) **BEAM MANAGEMENT METHOD AND COMMUNICATION APPARATUS**

(30) Priority: 16.01.2023 CN 202310098092
(71) Applicant: Huawei Technologies Co., Ltd., Shenzhen, Guangdong 518129 (CN)
(72) Inventor: GONG, Bo, Shenzhen, Guangdong 518129 (CN); GAN, Ming, Shenzhen, Guangdong 518129 (CN); LI, Yunbo, Shenzhen, Guangdong 518129 (CN); YU, Jian, Shenzhen, Guangdong 518129 (CN)
(74) Representative: Gill Jennings & Every LLP
(86) International application number: PCT/CN2023/119389
(87) International publication number: WO 2024/152589

(57) **Abstract**

This application provides a beam management method and a communication apparatus. The method may be applied to the field of millimeter-wave communication. The method includes: A communication apparatus 1 exchanges a radio frame 1 and a radio frame 3 with a communication apparatus 2 in a frequency band 1, where the radio frame 1 indicates that searching for a millimeter-wave transmit beam on a communication apparatus 1 side is about to start, and the radio frame 3 indicates the communication apparatus 2 to feed back an index of a received millimeter-wave transmit beam; and the communication apparatus 1 exchanges a radio frame 2 with the communication apparatus 2 in a frequency band 2, where the radio frame 2 is used for searching for the millimeter-wave transmit beam on the communication apparatus 1 side, and the frequency band 1 is less than the frequency band 2. In this way, in this application, searching for a millimeter-wave beam can be performed in a communication scenario with a high frequency band and a low frequency band.

## Description

This application claims priority to Chinese Patent Application No. 202310098092.0, filed with the China National Intellectual Property Administration on January 16, 2023 and entitled "BEAM MANAGEMENT METHOD AND COMMUNICATION APPARATUS", which is incorporated herein by reference in its entirety.

### TECHNICAL FIELD

This application relates to the field of communication technologies, and more specifically, to a beam management method and a communication apparatus.

### BACKGROUND

The 802.11ad protocol is a protocol dedicated to millimeter-wave communication, and relates to searching for a millimeter-wave beam. Specifically, the searching for a millimeter-wave beam may be divided into three subprocesses: searching for a millimeter-wave transmit beam on an access point (access point, AP) side, searching for a millimeter-wave transmit beam on a station (station, STA) side, and searching for a millimeter-wave receive beam and millimeter-wave beam combined training on the access point side/the station side. In addition, signaling and the like related to the searching for a millimeter-wave beam are all transmitted in a high frequency band, and are applicable to an application scenario with a high frequency band.

Currently, application of millimeter-wave communication in a communication scenario with a high frequency band and a low frequency band is being discussed in a standard. The searching for a millimeter-wave beam may not be applied to the foregoing communication scenario. Therefore, a method that is for searching for a millimeter-wave beam and that is applicable to the communication scenario with a high frequency band and a low frequency band is urgently needed.

### SUMMARY

This application provides a beam management method and a communication apparatus, to complete or perform searching of a millimeter-wave beam in a communication scenario with a high frequency band and a low frequency band.

According to a first aspect, a beam management method is provided. The method includes: A first communication apparatus sends a first radio frame to a second communication apparatus in a first frequency band, where the first radio frame indicates that searching for a millimeter-wave transmit beam is about to start; the first communication apparatus sends a second radio frame to the second communication apparatus in a second frequency band, where the second radio frame is used for searching for the millimeter-wave transmit beam; and the first communication apparatus sends a third radio frame to the second communication apparatus in the first frequency band, where the third radio frame indicates the second communication apparatus to feed back an index of a received millimeter-wave transmit beam. The first frequency band is less than the second frequency band.

It may be understood that the first communication apparatus and the second communication apparatus exchange the first radio frame and the third radio frame in the first frequency band, and the first communication apparatus and the second communication apparatus exchange the second radio frame in the second frequency band. In addition, the first frequency band is less than the second frequency band. In other words, the first frequency band may be a low frequency band (low frequency band), and the second frequency band may be a high frequency band (high frequency band). In this way, in this application, signaling interaction in the low frequency band can assist in searching for a millimeter-wave beam in the high frequency band, so that searching for a millimeter-wave beam can be performed in a communication scenario with a high frequency band and a low frequency band.

In addition, compared with an existing manner of searching for a millimeter-wave beam, in this application, time consumed for searching for a millimeter-wave beam can be reduced through coordination between the high frequency band and the low frequency band, and a dedicated control signal mode (for example, a control PHY mode) does not need to be used. This can simplify a protocol and a specific implementation.

In a possible implementation, the method further includes: The first communication apparatus receives a fourth radio frame from the second communication apparatus in the first frequency band, where the fourth radio frame includes the index of the millimeter-wave transmit beam received by the second communication apparatus.

This can complete a process of searching for the millimeter-wave transmit beam on a first communication apparatus side.

In a possible implementation, the method further includes: The first communication apparatus sends a fifth radio frame to the second communication apparatus in the first frequency band, where the fifth radio frame is used to request to perform searching of a millimeter-wave receive beam, and further indicates a number of millimeter-wave receive beams; the first communication apparatus receives a fifth radio frame from the second communication apparatus in the first frequency band, where the fifth radio frame further indicates to perform searching of the millimeter-wave receive beam; and the first communication apparatus receives a second radio frame from the second communication apparatus in the second frequency band, where the second radio frame is further used for searching for the millimeter-wave receive beam.

Specifically, the first communication apparatus and the second communication apparatus exchange the fifth radio frames in the first frequency band, to request a peer end to perform or confirm searching of the millimeter-wave receive beam. Further, the first communication apparatus receives the second radio frame from the second communication apparatus in the second frequency band, to finally complete a process of searching for the millimeter-wave receive beam on the first communication apparatus side.

In a possible implementation, the fifth radio frame is further used to request to perform millimeter-wave beam combined training, and the fifth radio frame further indicates a number of millimeter-wave transmit beams and a number of millimeter-wave receive beams in the combined training.

In this way, the first communication apparatus and the second communication apparatus may exchange the fifth radio frames in the first frequency band, so that millimeter-wave beam combined training on the first communication apparatus side and a second communication apparatus side can be completed.

Specifically, by performing the foregoing millimeter-wave beam combined training, in this application, a refined combination of millimeter-wave beams between the first communication apparatus and the second communication apparatus can be implemented, and millimeter-wave communication between the first communication apparatus and the second communication apparatus can be better assisted.

In a possible implementation, the fifth radio frame further indicates to perform the millimeter-wave beam combined training.

In a possible implementation, the second radio frame is further used for the millimeter-wave beam combined training.

In a possible implementation, the first radio frame includes a null data physical protocol data unit announcement NDPA, an application identifier AID field in the NDPA includes a first value, and the first value indicates that searching for the millimeter-wave transmit beam is about to start.

In this way, an AID value that is unused in an existing protocol may be used, to implement compatibility with the existing protocol.

In a possible implementation, the second radio frame includes a null data physical protocol data unit NDP, the NDP includes a beam index field, and the beam index field indicates an index of a millimeter-wave transmit beam.

According to the foregoing design of a structure of the second radio frame, in this application, the first communication apparatus and the second communication apparatus can complete the process of searching for the millimeter-wave transmit beam through exchanging the second radio frames.

In a possible implementation, the NDP further includes at least one of the following: a bandwidth field, a partial AID field, a number of symbols field of a long training field, a number of millimeter-wave transmit beams field, a cyclic redundancy check code field, or a number of remaining to-be-sent millimeter-wave beams field.

In a possible implementation, the fifth radio frame includes at least one of the following: a millimeter-wave receive beam training request field, a millimeter-wave receive beam training confirm field, a millimeter-wave beam combined training request field, a millimeter-wave beam combined training confirm field, a number of to-be-trained millimeter-wave receive beams field, or a number of to-be-trained millimeter-wave transmit beams field.

According to the foregoing design of a structure of the fifth radio frame, in this application, the first communication apparatus and the second communication apparatus can complete the processes like searching for a millimeter-wave receive beam, the millimeter-wave beam combined training, and the like through exchanging the fifth radio frames.

According to a second aspect, a beam management method is provided. The method includes: A second communication apparatus receives a first radio frame from a first communication apparatus in a first frequency band, where the first radio frame indicates that searching for a millimeter-wave transmit beam is about to start; the second communication apparatus receives a second radio frame from the first communication apparatus in a second frequency band, where the second radio frame is used for searching for the millimeter-wave transmit beam; and the second communication apparatus receives a third radio frame from the first communication apparatus in the first frequency band, where the third radio frame indicates the second communication apparatus to feed back an index of a received millimeter-wave transmit beam. The first frequency band is less than the second frequency band.

In a possible implementation, the method further includes: The second communication apparatus sends a fourth radio frame to the first communication apparatus in the first frequency band, where the fourth radio frame includes the index of the received millimeter-wave transmit beam.

In a possible implementation, the method further includes: The second communication apparatus receives a fifth radio frame from the first communication apparatus in the first frequency band, where the fifth radio frame is used to request to perform searching of a millimeter-wave receive beam, and further indicates a number of millimeter-wave receive beams; the second communication apparatus sends a fifth radio frame to the first communication apparatus in the first frequency band, where the fifth radio frame further indicates to perform searching of the millimeter-wave receive beam; and the second communication apparatus sends a second radio frame to the first communication apparatus in the second frequency band, where the second radio frame is further used for searching for the millimeter-wave receive beam.

In a possible implementation, the fifth radio frame is further used to request to perform millimeter-wave beam combined training, and further indicates a number of millimeter-wave transmit beams and a number of millimeter-wave receive beams in the combined training.

In a possible implementation, the fifth radio frame further indicates to perform the millimeter-wave beam combined training.

In a possible implementation, the second radio frame is further used for the millimeter-wave beam combined training.

In a possible implementation, the first radio frame includes a null data physical protocol data unit announcement NDPA, an application identifier AID field in the NDPA includes a first value, and the first value indicates that searching for the millimeter-wave transmit beam is about to start.

In a possible implementation, the second radio frame includes a null data physical protocol data unit NDP, the NDP includes a beam index field, and the beam index field indicates an index of a millimeter-wave transmit beam.

In a possible implementation, the NDP further includes at least one of the following: a bandwidth field, a partial AID field, a number of symbols field of a long training field, a number of millimeter-wave transmit beams field, a cyclic redundancy check code field, or a number of remaining to-be-sent millimeter-wave beams field.

In a possible implementation, the fifth radio frame includes at least one of the following: a millimeter-wave receive beam training request field, a millimeter-wave receive beam training confirm field, a millimeter-wave beam combined training request field, a millimeter-wave beam combined training confirm field, a number of to-be-trained millimeter-wave receive beams field, or a number of to-be-trained millimeter-wave transmit beams field.

According to a third aspect, a communication apparatus is provided, configured to perform the method according to the first aspect. In a design, the apparatus may include a module/unit that is in one-to-one correspondence with the method/operation/step/action described in the first aspect. The module/unit may be implemented by a hardware circuit, software, or a combination of the hardware circuit and software. In another design, the apparatus includes a transceiver unit, configured to send a first radio frame to a second communication apparatus in a first frequency band, where the first radio frame indicates that searching for a millimeter-wave transmit beam is about to start. The transceiver unit is further configured to send a second radio frame to the second communication apparatus in a second frequency band, where the second radio frame is used for searching for the millimeter-wave transmit beam. The transceiver unit is further configured to send a third radio frame to the second communication apparatus in the first frequency band, where the third radio frame indicates the second communication apparatus to feed back an index of a received millimeter-wave transmit beam. The first frequency band is less than the second frequency band.

In a possible implementation, the transceiver unit is further configured to receive a fourth radio frame from the second communication apparatus in the first frequency band, where the fourth radio frame includes the index of the received millimeter-wave transmit beam.

In a possible implementation, the transceiver unit is further configured to send a fifth radio frame to the second communication apparatus in the first frequency band, where the fifth radio frame is used to request to perform searching of a millimeter-wave receive beam, and further indicates a number of millimeter-wave receive beams. The transceiver unit is further configured to receive a fifth radio frame from the second communication apparatus in the first frequency band, where the fifth radio frame further indicates to perform searching of the millimeter-wave receive beam. The transceiver unit is further configured to receive a second radio frame from the second communication apparatus in the second frequency band, where the second radio frame is further used for searching for the millimeter-wave receive beam.

In a possible implementation, the fifth radio frame is further used to request to perform millimeter-wave beam combined training, and the fifth radio frame further indicates a number of millimeter-wave transmit beams and a number of millimeter-wave receive beams in the combined training.

In a possible implementation, the fifth radio frame further indicates to perform the millimeter-wave beam combined training.

In a possible implementation, the second radio frame is further used for the millimeter-wave beam combined training.

In a possible implementation, the first radio frame includes a null data physical protocol data unit announcement NDPA, an application identifier AID field in the NDPA includes a first value, and the first value indicates that searching for the millimeter-wave transmit beam is about to start.

In a possible implementation, the second radio frame includes a null data physical protocol data unit NDP, the NDP includes a beam index field, and the beam index field indicates an index of a millimeter-wave transmit beam.

In a possible implementation, the NDP further includes at least one of the following: a bandwidth field, a partial AID field, a number of symbols field of a long training field, a number of millimeter-wave transmit beams field, a cyclic redundancy check code field, or a number of remaining to-be-sent millimeter-wave beams field.

In a possible implementation, the fifth radio frame includes at least one of the following: a millimeter-wave receive beam training request field, a millimeter-wave receive beam training confirm field, a millimeter-wave beam combined training request field, a millimeter-wave beam combined training confirm field, a number of to-be-trained millimeter-wave receive beams field, or a number of to-be-trained millimeter-wave transmit beams field.

According to a fourth aspect, a communication apparatus is provided, configured to perform the method according to the second aspect. In a design, the apparatus may include a module/unit that is in one-to-one correspondence with the method/operation/step/action described in the first aspect. The module/unit may be implemented by a hardware circuit, software, or a combination of the hardware circuit and software. In another design, the apparatus includes a transceiver unit, configured to receive a first radio frame from a first communication apparatus in a first frequency band, where the first radio frame indicates that searching for a millimeter-wave transmit beam is about to start. The transceiver unit is further configured to receive a second radio frame from the first communication apparatus in a second frequency band, where the second radio frame is used for searching for the millimeter-wave transmit beam. The transceiver unit is further configured to receive a third radio frame from the first communication apparatus in the first frequency band, where the third radio frame indicates a second communication apparatus to feed back an index of a received millimeter-wave transmit beam. The first frequency band is less than the second frequency band.

In a possible implementation, the transceiver unit is further configured to send a fourth radio frame to the first communication apparatus in the first frequency band, where the fourth radio frame includes the index of the received millimeter-wave transmit beam.

In a possible implementation, the transceiver unit is further configured to receive a fifth radio frame from the first communication apparatus in the first frequency band, where the fifth radio frame is used to request to perform searching of a millimeter-wave receive beam, and further indicates a number of millimeter-wave receive beams. The transceiver unit is further configured to send a fifth radio frame to the second communication apparatus in the first frequency band, where the fifth radio frame further indicates to perform searching of the millimeter-wave receive beam. The transceiver unit is further configured to send a second radio frame to the first communication apparatus in the second frequency band, where the second radio frame is further used for searching for the millimeter-wave receive beam.

In a possible implementation, the fifth radio frame is further used to request to perform millimeter-wave beam combined training, and further indicates a number of millimeter-wave transmit beams and a number of millimeter-wave receive beams in the combined training.

In a possible implementation, the fifth radio frame further indicates to perform the millimeter-wave beam combined training.

In a possible implementation, the second radio frame is further used for the millimeter-wave beam combined training.

In a possible implementation, the first radio frame includes a null data physical protocol data unit announcement NDPA, an application identifier AID field in the NDPA includes a first value, and the first value indicates that searching for the millimeter-wave transmit beam is about to start.

In a possible implementation, the second radio frame includes a null data physical protocol data unit NDP, the NDP includes a beam index field, and the beam index field indicates an index of a millimeter-wave transmit beam.

In a possible implementation, the NDP further includes at least one of the following: a bandwidth field, a partial AID field, a number of symbols field of a long training field, a number of millimeter-wave transmit beams field, a cyclic redundancy check code field, or a number of remaining to-be-sent millimeter-wave beams field.

In a possible implementation, the fifth radio frame includes at least one of the following: a millimeter-wave receive beam training request field, a millimeter-wave receive beam training confirm field, a millimeter-wave beam combined training request field, a millimeter-wave beam combined training confirm field, a number of to-be-trained millimeter-wave receive beams field, or a number of to-be-trained millimeter-wave transmit beams field.

According to a fifth aspect, a communication apparatus is provided, including a processor. The processor is configured to enable, by executing a computer program or instructions or via a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a sixth aspect, a communication apparatus is provided, including a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided, including a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, including instructions. When the instructions are run on a computer, the method according to any one of the first aspect and the possible implementations of the first aspect is performed, or the method according to any one of the second aspect and the possible implementations of the second aspect is performed.

According to a ninth aspect, a computer program is provided. When the computer program is run on a computer, the method according to any one of the first aspect and the possible implementations of the first aspect is performed, or the method according to any one of the second aspect and the possible implementations of the second aspect is performed.

For descriptions of beneficial effects of the second aspect to the ninth aspect, refer to the descriptions of the beneficial effects of the first aspect. Details are not described herein again.

### BRIEF DESCRIPTION OF DRAWINGS

FIG. 1 is a diagram of an application scenario 100 according to an embodiment of this application;
FIG. 2 is a schematic interaction flowchart of a beam management method 200 according to an embodiment of this application;
FIG. 3 is a diagram of a structure of a radio frame 1 according to an embodiment of this application;
FIG. 4 is a diagram of a structure of a radio frame 2 according to an embodiment of this application;
FIG. 5 is a schematic interaction flowchart of a beam management method 500 according to an embodiment of this application;
FIG. 6 is a schematic interaction flowchart of a beam management method 600 according to an embodiment of this application;
FIG. 7 is a schematic interaction flowchart of a beam management method 700 according to an embodiment of this application;
FIG. 8 is a schematic interaction flowchart of a beam management method 800 according to an embodiment of this application;
FIG. 9 is a block diagram of a communication apparatus 900 according to an embodiment of this application;
FIG. 10 is a block diagram of a communication apparatus 1000 according to an embodiment of this application;
FIG. 11 is a block diagram of a communication apparatus 1100 according to an embodiment of this application;
FIG. 12 is a block diagram of a communication apparatus 1200 according to an embodiment of this application; and
FIG. 13 is a block diagram of a communication apparatus 1300 according to an embodiment of this application.

### DESCRIPTION OF EMBODIMENTS

The following describes the technical solutions of this application with reference to the accompanying drawings.

The technical solutions of this application are applicable to a wireless local area network (wireless local area network, WLAN) scenario, for example, are applicable to an IEEE 802.11 system standard, for example, the 802.11a/b/g standard, the 802.11n standard, the 802.11ac standard, the 802.11ax standard, the 802.11ad standard, the 802.11ay standard, the 802.11aj standard, or the 802.11bf standard, or a next-generation standard thereof, for example, the 802.11 be standard, or a further next-generation standard.

Although this application is mainly described by using an example in which a WLAN network is deployed, and in particular, a network to which an IEEE 802.11 system standard is applied, a person skilled in the art easily understands that various aspects in embodiments of this application may be extended to other networks using various standards or protocols, for example, Bluetooth (Bluetooth), a high performance radio local area network (high performance radio local area network, HIPERLAN), a wide area network (wide area network, WAN), a personal area network (personal area network, PAN), or another network that is known or developed in the future. Therefore, regardless of used coverage and a used wireless access protocol, various aspects provided in this application are applicable to any proper wireless network.

The technical solutions of this application may be further applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a future 6th generation (6th generation, 6G) system, and a wireless local area network system such as an internet of things (internet of things, IoT) network or vehicle-to-everything (vehicle to x, V2X).

The foregoing communication systems to which this application is applicable are merely examples for description, and communication systems to which this application is applicable are not limited thereto. This is described herein once for all, and details are not described below again.

A terminal in this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future 6G network, a terminal device in a public land mobile network (public land mobile network, PLMN), or the like. This is not limited in embodiments of this application.

A network device in this application may be a device configured to communicate with a terminal. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future 6G network, a network device in a PLMN network, or the like. This is not limited in embodiments of this application.

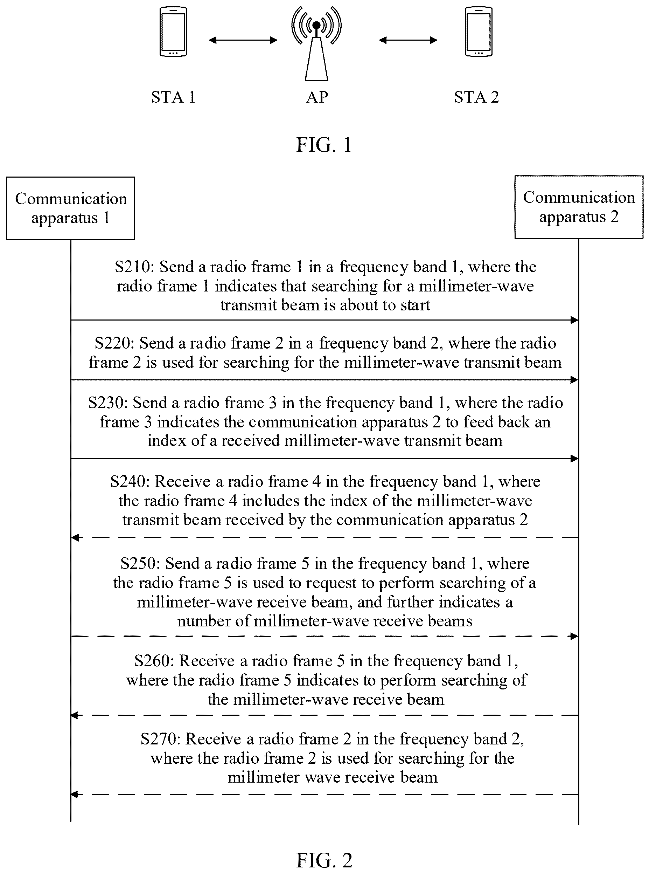

FIG. 1 is a diagram of an application scenario 100 according to an embodiment of this application. As shown in FIG. 1, an access point (access point, AP) may be a communication server, a router, or a switch, or may be any one of the foregoing network devices, and a station (station, STA) may be a mobile phone or a computer, or may be any one of the foregoing terminals. This is not limited in embodiments of this application.

It may be understood that the technical solutions of this application are not only applicable to communication between an AP and one or more STAs, but also applicable to communication between a STA and one or more APs, applicable to mutual communication between APs, and applicable to mutual communication between STAs. For ease of description, this application is described by using merely an example in which an AP communicates with one or more SATs. However, this description manner does not have any limitation on an actual application scope of the technical solutions of this application. This is described herein once for all, and details are not described below again.

The access point may be an access point used by a terminal (such as a mobile phone) to access a wired (or wireless) network, and is mainly deployed at home, in a building, or in a campus. A typical coverage radius is tens of meters or more than 100 meters. Certainly, the access point may alternatively be deployed outdoors. The access point is equivalent to a bridge that connects a wired network to a wireless network. The access point is mainly used to connect various wireless network clients together and then connect the wireless network to the Ethernet. Specifically, the access point may be a terminal device (for example, a mobile phone) or a network device (for example, a router) with a Wi-Fi chip. The access point may be a device supporting the 802.11be standard. Alternatively, the access point may be a device supporting a plurality of WLAN standards of the 802.11 family such as 802.11ax, 802.11ac, 802.11n, 802.11g, 802.11b, 802.11a, 802.11ad, 802.11ay, 802.11aj, 802.11bf, 802.11be, and a next generation of 802.11be. The access point in this application may be an HE AP or an EHT AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support WLAN standards of the 802.11 family such as 802.11ax, 802.11ac, 802.11n, 802.11g, 802.11b, 802.11a, 802.11ad, 802.11ay, 802.11aj, 802.11bf, 802.11be, and a next generation of 802.11be.

For example, the access point and the station each may be a device used in the internet of vehicles, an internet of things node, a sensor, or the like in the IoT, a smart camera, a smart remote control, or a smart water/electricity meter in a smart home, a sensor in a smart city, or the like.

It should be understood that the technical solutions of this application are not only applicable to communication between an AP and one or more STAs, but also applicable to communication between a STA and one or more APs, applicable to mutual communication between APs, and applicable to mutual communication between STAs. For ease of description, this application is described by using merely an example in which an AP communicates with one or more STAs. However, this description manner does not have any limitation on an actual application scope of the technical solutions of this application. This is described herein once for all, and details are not described below again.

A wireless communication system provided in this application may be a WLAN or a cellular network. A method may be implemented by a communication device in the wireless communication system or a chip or a processor in a communication device. The communication device may be a wireless communication device that supports parallel transmission on a plurality of links, for example, referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may work on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or a STA multi-link device (STA multi-link device).

As described above, the 802.11ad protocol is a protocol dedicated to millimeter-wave communication, and relates to searching for a millimeter-wave beam. Specifically, searching for a millimeter-wave beam includes the following several subprocesses:
1. Searching for a millimeter-wave transmit beam on an AP side. Specifically, an AP sends a directional multi-gigabit (directional multi-gigabit, DMG) beacon (Beacon) frame to each millimeter-wave transmit beam direction in a control-mode physical layer signal (Control PHY) mode. Correspondingly, a STA receives the DMG beacon frame from the AP in a pseudo-omnidirectional manner, and selects a best millimeter-wave transmit beam direction from received millimeter-wave transmit beam directions.
2. Searching for a millimeter-wave transmit beam on a STA side. Specifically, a STA randomly selects a slot for access, and searches for a millimeter-wave transmit beam in the slot. The STA also sends a sector sweep (sector sweep, SSW) frame to an AP in the control PHY mode. The sector sweep frame includes not only an index of a millimeter-wave transmit beam on the STA side, but also an index of a millimeter-wave transmit beam received by the STA.
3. Searching for a millimeter-wave receive beam and performing millimeter-wave beam combined training on the AP/STA side. Specifically, a signal related to searching for the millimeter-wave receive beam and performing millimeter-wave beam combined training on the AP/STA side is in a form of beam refinement protocol (beam refinement protocol, BRP) packet. For descriptions of the BRP packet, refer to an existing protocol. Details are not described herein. In addition, execution of searching for the millimeter-wave receive beam and performing millimeter-wave beam combined training by an AP/a STA is basically similar to the foregoing searching for a millimeter-wave transmit beam. Details are not described herein again.

It may be understood that, for signaling related to searching for the millimeter-wave beam, refer to descriptions in the 802.1 1ad protocol. Details are not described herein. Signaling and the like related to searching for the millimeter-wave beam are all transmitted in a high frequency band, and are applicable to an application scenario with a high frequency band. Currently, application of millimeter-wave communication in a communication scenario with a high frequency band and a low frequency band is being discussed in a standard. The foregoing method for searching for a millimeter-wave beam may not be applied to the communication scenario with a high frequency band and a low frequency band. Specifically, searching for the millimeter-wave beam is to determine a proper positioning beam. On a premise that a directional beam is not determined, transmission of the signaling related to searching for the millimeter-wave beam is mainly completed in the control PHY mode, but a signal transmission rate in the control PHY mode is low. Consequently, the foregoing process of searching for the millimeter-wave beam takes a long time. In addition, a signal in the control PHY mode needs to be specially designed and implemented. This increases complexity of a protocol and an implementation. Therefore, a method that is for searching for a millimeter-wave beam and that is applicable to the communication scenario with a high frequency band and a low frequency band is urgently needed.

The following describes a beam management method in embodiments of this application with reference to the accompanying drawings.

FIG. 2 is a schematic interaction flowchart of a beam management method 200 according to an embodiment of this application. A procedure of the method in FIG. 2 may be performed by a communication apparatus 1 and a communication apparatus 2, or may be performed by modules and/or components (for example, chips or integrated circuits) that are installed in the communication apparatus 1 and the communication apparatus 2 and that have corresponding functions. This is not limited. The following uses the communication apparatus 1 and the communication apparatus 2 as an example for description. The communication apparatus 1 may be an AP, and the communication apparatus 2 may be a STA; or the communication apparatus 1 may be a STA, and the communication apparatus 2 may be an AP. This is not limited. As shown in FIG. 2, the method 200 includes the following steps.

S210: The communication apparatus 1 sends a radio frame 1 to the communication apparatus 2 in a frequency band 1, where the radio frame 1 indicates that searching for a millimeter-wave transmit beam is about to start.

Correspondingly, the communication apparatus 2 receives the radio frame 1 from the communication apparatus 1 in the frequency band 1, and determines, based on the radio frame 1, that the communication apparatus 1 is about to perform searching of the millimeter-wave transmit beam.

It may be understood that when the communication apparatus 1 is one AP, the communication apparatus 2 may be one or more STAs. In other words, S210 may be as follows: One AP broadcasts a radio frame 1 to one or more STAs in a frequency band 1, and the radio frame 1 indicates, to the one or more STAs, that the one AP is about to start searching for a millimeter-wave transmit beam on an AP side. When the communication apparatus 1 is one STA, the communication apparatus 2 may be one AP. In other words, S210 may be as follows: One STA sends a radio frame 1 to one AP in a frequency band 1, where the radio frame 1 indicates, to the AP, that the STA is about to start searching for a millimeter-wave transmit beam on a STA side. In other words, the AP and the STA exchange the radio frame 1 in the frequency band 1, to indicate, to a receive end (the communication apparatus 2), that searching for a millimeter-wave transmit beam on a transmit end (the communication apparatus 1) side is about to start.

In a possible implementation, after the communication apparatus 2 determines, based on the radio frame 1, that the communication apparatus 1 is about to start searching for the millimeter-wave transmit beam, the communication apparatus 2 may further determine, based on the radio frame 1, that the communication apparatus 2 needs to enable a high frequency link and needs to be in an omnidirectional receiving state. Enabling of the high frequency link can enable the communication apparatus 2 and the communication apparatus 1 to perform searching of the millimeter-wave transmit beam, that is, can complete searching for the millimeter-wave transmit beam on a communication apparatus 1 side.

S220: The communication apparatus 1 sends a radio frame 2 to the communication apparatus 2 in a frequency band 2, where the radio frame 2 is used for searching for the millimeter-wave transmit beam.

Correspondingly, the communication apparatus 2 receives the radio frame 2 from the communication apparatus 1 in the frequency band 2, and completes, based on the radio frame 2, searching for the millimeter-wave transmit beam.

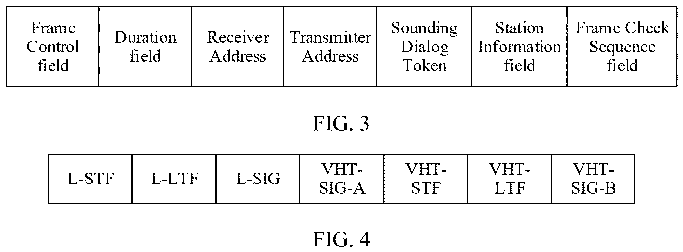

It may be understood that when the communication apparatus 1 is one STA, the communication apparatus 2 is one AP. In other words, S220 may be as follows: One STA sends one or more radio frames 2 to one AP in a frequency band 2. When the one STA sends one radio frame 2 to the AP, the one radio frame 2 corresponds to a plurality of millimeter-wave transmit beams on a STA side. When the one STA sends a plurality of radio frames 2 to the AP, one radio frame 2 corresponds to one millimeter-wave transmit beam on a STA side (for specific descriptions of the radio frame 2, refer to FIG. 4, and details are not described herein). When the communication apparatus 1 is one AP, the communication apparatus 2 is one or more STAs. In other words, S220 may be as follows: One AP sends a plurality of radio frames 2 to one or more STAs, where each radio frame 2 corresponds to one millimeter-wave transmit beam on an AP side. Specifically, for the former case, the STA sends the one or more radio frames 2 to the AP in the frequency band 2. One radio frame 2 may correspond to a plurality of millimeter-wave transmit beams on the STA side, or one radio frame 2 may correspond to one millimeter-wave transmit beam on the STA side. This is not limited. For the latter case, the one AP sends the plurality of radio frames 2 to the one or more STAs in the frequency band 2, and a number of radio frames 2 is consistent with a number of millimeter-wave transmit beams on the AP side. For the former case, the AP may receive or feed back a part or all of millimeter-wave transmit beams sent by the STA side. This is not limited. For the latter case, different STAs may receive a part or all of the radio frames 2 sent by the AP side. This is not limited either. For specific descriptions, refer to the following descriptions.

S230: The communication apparatus 1 sends a radio frame 3 to the communication apparatus 2 in the frequency band 1, where the radio frame 3 indicates the communication apparatus 2 to feed back an index of a received millimeter-wave transmit beam.

Correspondingly, the communication apparatus 2 receives the radio frame 3 from the communication apparatus 1 in the frequency band 1, and determines, based on the radio frame 3, that the index of the millimeter-wave transmit beam received by the communication apparatus 2 needs to be fed back to the communication apparatus 1.

Specifically, when the communication apparatus 1 is one AP and the communication apparatus 2 is one or more STAs, the AP may broadcast N radio frames 2 to a STA side, and each STA on the STA side receives the N radio frames 2 from the AP in an omnidirectional receiving manner, and may receive M radio frames 2 in the N radio frames 2, where M≤N (both M and N are positive integers). Therefore, indices that are of millimeter-wave transmit beams and that are fed back by different STAs to the AP may be different. For example, the AP broadcasts 10 radio frames 2 to three STAs (which are a STA 1, a STA 2, and a STA 3), the STA 1 receives first three radio frames 2 in the 10 radio frames 2, the STA 2 receives middle four radio frames 2 in the 10 radio frames 2, and the STA 3 receives last three radio frames 2 in the 10 radio frames 2. Correspondingly, the STA 1 feeds back, to the AP, indices of millimeter-wave transmit beams respectively corresponding to the first three radio frames 2 in the 10 radio frames 2, the STA 2 feeds back, to the AP, indices of millimeter-wave transmit beams respectively corresponding to the middle four radio frames 2 in the 10 radio frames 2, and the STA 3 feeds back, to the AP, indices of millimeter-wave transmit beams respectively corresponding to the last three radio frames 2 in the 10 radio frames 2.

In an example, when the communication apparatus 2 receives a plurality of radio frames 2 from the communication apparatus 1, the communication apparatus 2 may feed back indices of a plurality of received millimeter-wave transmit beams to the communication apparatus 1 in descending order of signal-to-noise ratio (signal-to-noise ratio, SNR) values of the millimeter-wave transmit beams. In another example, if the communication apparatus 2 receives no radio frame 2 from the communication apparatus 1, the communication apparatus 2 may feed back, to the communication apparatus 1, that no radio frame 2 corresponding to a millimeter-wave transmit beam is received (that is, a null (null) is fed back).

It may be understood that, in the method 200, the communication apparatus 1 and the communication apparatus 2 exchange the radio frame 1 and the radio frame 3 in the frequency band 1, and the communication apparatus 1 and the communication apparatus 2 exchange the radio frame 2 in the frequency band 2. In addition, the frequency band 1 is less than the frequency band 2. In other words, the frequency band 1 may be a low frequency band (low frequency band), and the frequency band 2 may be a high frequency band (high frequency band). In this way, in this application, signaling interaction in the low frequency band can assist in searching for a millimeter-wave beam in the high frequency band, so that searching for a millimeter-wave beam can be performed in a communication scenario with a high frequency band and a low frequency band.

In addition, compared with an existing manner of searching for a millimeter-wave beam, in this application, time consumed for searching for a millimeter-wave beam can be reduced through coordination between the high frequency band and the low frequency band, and a dedicated control signal mode (for example, the foregoing control PHY mode) does not need to be used. This can simplify a protocol and a specific implementation.

Optionally, in a possible implementation, the method 200 may further include:
S240: The communication apparatus 1 receives a radio frame 4 from the communication apparatus 2 in the frequency band 1, where the radio frame 4 includes the index of the millimeter-wave transmit beam received by the communication apparatus 2.

Specifically, the communication apparatus 1 and the communication apparatus 2 exchange the radio frame 2 in the frequency band 2, and the communication apparatus 2 may receive a part or all of the radio frames 2 from the communication apparatus 1 in the frequency band 2. Further, the communication apparatus 2 sends, to the communication apparatus 1 in the frequency band 1 under an indication of the radio frame 3, the radio frame 4 including the index of the millimeter-wave transmit beam received by the communication apparatus 2. For specific descriptions of S240, refer to the foregoing descriptions of S230. Details are not described herein again. This can complete searching for the millimeter-wave transmit beam on the communication apparatus 1 side, and does not need to use a dedicated control signal mode, thereby simplifying a protocol and a specific implementation.

Optionally, in a possible implementation, the method 200 may further include:
S250: The communication apparatus 1 sends a radio frame 5 to the communication apparatus 2 in the frequency band 1, where the radio frame 5 is used to request to perform searching of a millimeter-wave receive beam, and the radio frame 5 further indicates a number of millimeter-wave receive beams.
S260: The communication apparatus 1 receives a radio frame 5 from the communication apparatus 2 in the frequency band 1, where the radio frame 5 indicates to perform searching of the millimeter-wave receive beam.
S270: The communication apparatus 1 receives a radio frame 2 from the communication apparatus 2 in the frequency band 2, where the radio frame 2 is further used for searching for the millimeter-wave receive beam.

Specifically, when searching for the millimeter-wave receive beam, the communication apparatus 1 may be one AP, and the communication apparatus 2 may be one STA; or the communication apparatus 1 may be one STA, and the communication apparatus 2 may be one AP. This is not limited herein. For ease of description, the communication apparatus 1 and the communication apparatus 2 herein are not limited. In this embodiment of this application, the radio frame 2 may not only be used for searching for the millimeter-wave transmit beam, but also be used for searching for the millimeter-wave receive beam. In other words, the radio frame 2 can be used for searching for millimeter-wave beams (including a millimeter-wave transmit beam and a millimeter-wave receive beam).

It may be understood that, when searching for the millimeter-wave receive beam, the communication apparatus 1 and the communication apparatus 2 exchange the radio frames 5 in the frequency band 1, to request a peer end to perform or confirm searching of the millimeter-wave receive beam. Then, the communication apparatus 1 receives the radio frame 2 sent by the communication apparatus 2 in the frequency band 2 (through a pseudo-omnidirectional antenna or a pseudo-omnidirectional beam). Correspondingly, the communication apparatus 1 completes, based on receiving of the radio frame 2 sent by the communication apparatus 2, searching for the millimeter-wave receive beam on the communication apparatus 1 side.

Before searching for the millimeter-wave receive beam (that is, before S270), the communication apparatus 2 sends the radio frame 5 to the communication apparatus 1 in the frequency band 1. The radio frame 5 sent by the communication apparatus 2 is used to confirm the radio frame 5 sent by the communication apparatus 1. In other words, the radio frame 5 sent by the communication apparatus 2 to the communication apparatus 1 in the frequency band 1 can be used to confirm the radio frame 5 sent by the communication apparatus 1. In other words, the communication apparatus 2 sends the radio frame 5 to indicate, to the communication apparatus 1, that the communication apparatus 2 sends, to the communication apparatus 1, the radio frame 2 used by the communication apparatus 1 to perform searching of the millimeter-wave receive beam.

In an example, the radio frame 5 sent by the communication apparatus 1 may further indicate the number of millimeter-wave receive beams on the communication apparatus 1 side. Correspondingly, the communication apparatus 2 determines, based on the number of millimeter-wave receive beams that is indicated by the radio frame 5 sent by the communication apparatus 1, a number of millimeter-wave receive beams corresponding to the radio frame 2. A structure of the radio frame 2 is further described below.

In a possible implementation, the radio frame 5 may be further used to request to perform millimeter-wave beam combined training, and the radio frame 5 further indicates a number of millimeter-wave transmit beams and a number of millimeter-wave receive beams in the combined training. This can implement a refined combination of millimeter-wave beams between the communication apparatus 1 and the communication apparatus 2, and can better assist millimeter-wave communication between the communication apparatus 1 and the communication apparatus 2. The millimeter-wave beam combined training is further described below, and details are not described herein.

It should be noted that, in the method 200, the radio frame 2 can be used for searching for millimeter-wave beams, and searching for millimeter-wave beams may include searching for a millimeter-wave transmit beam, and may include searching for a millimeter-wave receive beam. This is not limited. When content of the radio frame 2 is sent, this application supports an example in which one radio frame 2 corresponds to one millimeter-wave transmit beam, and may further support an example in which one radio frame 2 corresponds to a plurality of millimeter-wave transmit beams. In addition, this application also supports an example in which one radio frame 2 corresponds to one millimeter-wave receive beam, and may further support an example in which one radio frame 2 corresponds to a plurality of millimeter-wave receive beams. This is associated with a design of the frame structure of the radio frame 2. For details, refer to the following descriptions.

It should be further noted that S250 to S270 may be performed before S240. This is not limited herein.

The following describes a part of radio frames in the method 200 with reference to other accompanying drawings.

FIG. 3 is a diagram of a structure of the radio frame 1 according to an embodiment of this application. The radio frame 1 may be a null data physical protocol data unit announcement (null data physical protocol data unit announcement, NDPA) frame (or the radio frame 1 includes an NDPA). A structure of the NDPA is shown in FIG. 3. The NDPA frame includes the following fields: a frame control (frame control) field, a duration (duration) field, a receiver address (receiver address, RA), a transmitter address (transmitter address, TA), a sounding dialog token (sounding dialog token) field, at least one station information (STA info) field, a frame check sequence (frame check sequence, FCS) field, and the like. In this application, a value of an application identifier (application identifier, AID) field in the STA info field can be set to a first value, and the first value is an unused value (for example, not applicable), for example, 2043, 2045, or 2046. In this way, in this application, the first value of the AID field can indicate that searching for a millimeter-wave transmit beam on the communication apparatus 1 side is about to start. For descriptions of other fields of the NDPA frame, refer to an existing protocol. Details are not described herein. For a design of the STA info field, refer to an existing protocol. Details are not described herein.

FIG. 4 is a diagram of a structure of the radio frame 2 according to an embodiment of this application. The radio frame 2 includes a null data physical protocol data unit (null data physical protocol data unit, NDP). A structure of the NDP is shown in FIG. 4. Specifically, the NDP includes a legacy-short training field (legacy-short training field, L-STF), a legacy-long training field (legacy-long training field, L-LTF), a legacy-signal (legacy-signal, L-SIG), a very high throughput-signal A (very high throughput signal A, VHT-SIG-A), a VHT-STF, a VHT-LTF, and a VHT-SIG-B. The VHT-SIG-A includes a beam index field, and the beam index field indicates an index of a millimeter-wave transmit beam (or a millimeter-wave receive beam).

In an example, the VHT-SIG-A further includes at least one of the following fields: a bandwidth (bandwidth, BW) field, a partial AID (partial AID) field, a number of symbols field of an LTF (or a number of millimeter-wave beams field), a cyclic redundancy check code (cyclic redundancy check code, CRC) field, or a number of remaining to-be-sent millimeter-wave beams field (CDOWN). The bandwidth field may be used to allow the NDP to use more bandwidth configurations, so that a process of searching for a millimeter-wave beam is more flexible. The partial AID field may enable the receive end to identify whether an NDP is sent to the receive end. The number of symbols field or the number of millimeter-wave beams field may be used to notify the receive end of a number of millimeter-wave beams that need to be measured, so that the receive end can determine time for receiving the NDP.

It may be understood that, that one radio frame 2 corresponds to one or more millimeter-wave transmit beams (or millimeter-wave receive beams) may be that one millimeter-wave transmit beam (or millimeter-wave receive beam) corresponds to a specific number of LTF symbols in the radio frame 2. For example, each millimeter-wave transmit beam (or millimeter-wave receive) corresponds to k LTF symbols of an NDP in the one radio frame 2, where k≥1. Therefore, when the one radio frame 2 corresponds to the one millimeter-wave transmit beam, the NDP in the radio frame 2 includes the k LTF symbols, and a beam index field in the NDP indicates an index of the one millimeter-wave transmit beam. When one radio frame 2 corresponds to h millimeter-wave transmit beams, an NDP in the radio frame 2 includes k*h LTF symbols. Therefore, in the foregoing content descriptions, a number of sent radio frames 2 is not limited in this application.

In a possible implementation, the radio frame 5 may include at least one of the following fields: a millimeter-wave receive beam training request (Rx_request) field, a millimeter-wave receive beam training confirm (Rx_grant) field, a millimeter-wave beam combined training request (combine_request) field, a millimeter-wave beam combined training confirm (combine_grant) field, a number of to-be-trained millimeter-wave receive beams (L-RX) field, or a number of to-be-trained millimeter-wave transmit beams (L-TX) field. According to the design of a structure of the fifth radio frame, in this application, a first communication apparatus and a second communication apparatus can complete the processes like searching for a millimeter-wave receive beam, the millimeter-wave beam combined training, and the like through exchanging the fifth radio frames. More specifically, the communication apparatus 1 and the communication apparatus 2 may communicate a parameter based on the radio frames 5, so that the processes like searching for a millimeter-wave receive beam, the millimeter-wave beam combined training, and the like can be completed.

In a possible implementation, the radio frame 3 may be a trigger frame, and is used to trigger the communication apparatus 2 to feed back, to the communication apparatus 1, the index of the millimeter-wave transmit beam received by the communication apparatus 2. The radio frame 3 may use an unused value to indicate the communication apparatus 2 to feed back the index of the millimeter-wave transmit beam received by the communication apparatus 2. For example, a value of a trigger type (trigger type) in the trigger frame (the radio frame 3) may be any one of 8 to 15, and may indicate the communication apparatus 2 to feed back the index of the millimeter-wave transmit beam received by the communication apparatus 2. This is not limited.

In a possible implementation, the radio frame 3 may alternatively be a request (request) frame, and is used to request the communication apparatus 2 to feed back, to the communication apparatus 1, the index of the millimeter-wave transmit beam received by the communication apparatus 2.

The following further describes the method 200 shown in FIG. 2 with reference to other accompanying drawings.

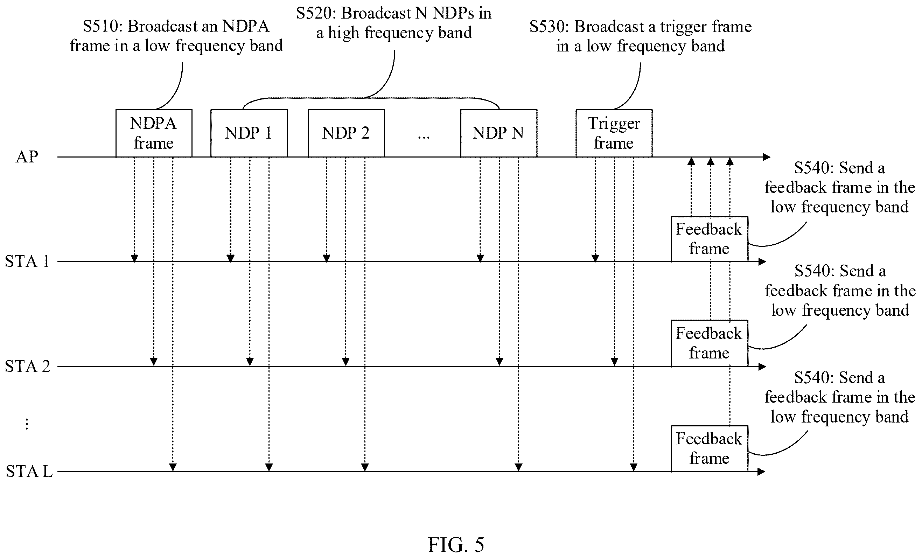

FIG. 5 is a schematic interaction flowchart of a beam management method 500 according to an embodiment of this application. A procedure of the method in FIG. 5 may be performed by an AP and a STA, or may be performed by modules and/or components (for example, chips or integrated circuits) that are installed in the AP and the STA and that have corresponding functions. This is not limited. The following uses the AP and the STA as an example for description. As shown in FIG. 5, the method 500 includes the following steps.

S510: The AP broadcasts an NDPA frame to L (for example, L≥1) STAs in a low frequency band.

Correspondingly, each of the L STAs receives, in the low frequency band, the NDPA frame sent by the AP.

S520: The AP broadcasts N NDPs to the L STAs in a high frequency band.

Correspondingly, each of the L STAs receives, in the high frequency band, a part or all of the N NDPs sent by the AP. One millimeter-wave transmit beam corresponds to one NDP.

S530: The AP broadcasts a trigger frame to the L STAs in a low frequency band.

Correspondingly, the L STAs receive the trigger frame (which may be a radio frame 3) from the AP in the low frequency band, and determine, based on the trigger frame, that an index of a millimeter-wave transmit beam received by the STA needs to be fed back to the AP.

S540: The L STAs send feedback frames to the AP in the low frequency band.

Correspondingly, the AP receives the feedback frames from the STAs in the low frequency band, and determines, based on the feedback frames, the index of the millimeter-wave transmit beam received by each STA.

Specifically, after receiving the trigger frame, the STA may feed back the index of the received millimeter-wave transmit beam to the AP in a trigger-based PPDU (trigger-based PPDU, TB-PPDU) (which may be a radio frame 4). If the STA receives a plurality of NDPs, the STA may feed back indices of received millimeter-wave transmit beams to the AP in descending order of SNRs of the millimeter-wave transmit beams. If the STA receives no NDP, the STA feeds back a null value to the AP.

According to the foregoing solution, in this application, signaling interaction in the low frequency band can assist in searching for a millimeter-wave transmit beam in the high frequency band. In this way, searching for a millimeter-wave transmit beam can be performed in a communication scenario with a low frequency band and a high frequency band, and time consumed in a whole process of searching for a millimeter-wave transmit beam can be reduced.

Compared with an existing manner of searching for a millimeter-wave transmit beam, in this application, time consumed for millimeter-wave beam transmit search can be reduced through coordination between the high frequency band and the low frequency band, and a dedicated control signal mode (for example, the foregoing control PHY mode) does not need to be used. This can simplify a protocol and a specific implementation.

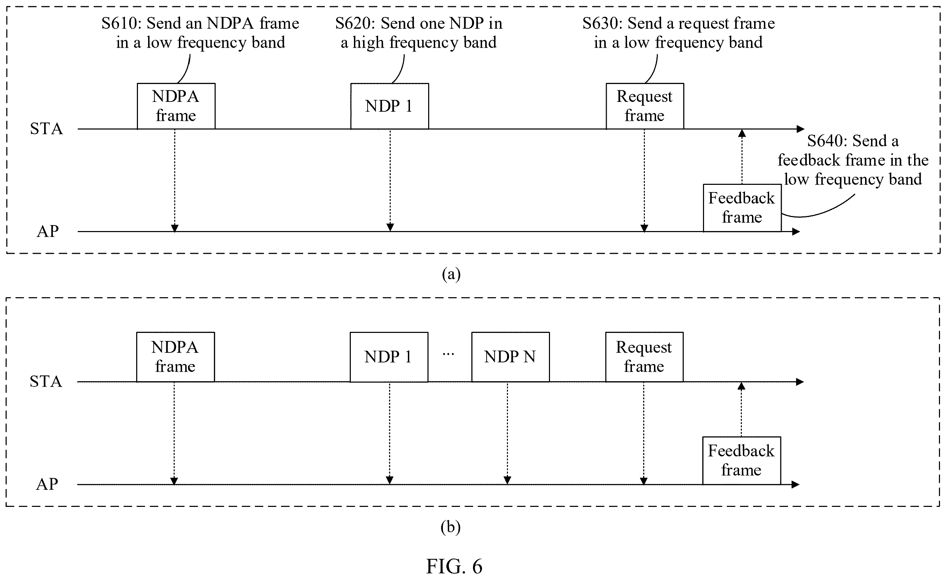

FIG. 6 is a schematic interaction flowchart of a beam management method 600 according to an embodiment of this application. A procedure of the method in FIG. 6 may be performed by an AP and a STA, or may be performed by modules and/or components (for example, chips or integrated circuits) that are installed in the AP and the STA and that have corresponding functions. This is not limited. The following uses the AP and the STA as an example for description. As shown in (a) in FIG. 6, the method 600 includes the following steps.

S610: The STA sends an NDPA frame to the AP in a low frequency band.

Correspondingly, the AP receives, in the low frequency band, the NDPA frame sent by the STA.

S620: The STA sends one NDP to the AP in a high frequency band.

Correspondingly, the AP receives the one NDP from the STA in the high frequency band. One NDP may correspond to a plurality of millimeter-wave transmit beams on a STA side, that is, one millimeter-wave transmit beam corresponds to k LTF symbols (k≥1) in one NDP.

Optionally, in S620, the STA may alternatively send N NDPs (N≥2) to the AP in the high frequency band, and each NDP corresponds to one millimeter-wave transmit beam on the STA side. For this scenario, refer to descriptions of an example in (b) in FIG. 6. Details are not described herein.

S630: The STA sends a request frame to the AP in a low frequency band.

Correspondingly, the AP receives the request frame (which may also be a radio frame 3) from the STA in the low frequency band, and determines, based on the request frame, that an index of a millimeter-wave transmit beam received by the AP needs to be fed back to the STA.

S640: The AP sends a feedback frame to the STA in the low frequency band.

Correspondingly, the STA receives the feedback frame from the AP in the low frequency band, and determines, based on the feedback frame, the index of the millimeter-wave transmit beam received by the AP.

According to the foregoing solution, in this application, signaling interaction in the low frequency band can assist in searching for a millimeter-wave transmit beam in the high frequency band. In this way, searching for a millimeter-wave transmit beam can be performed in a communication scenario with a low frequency band and a high frequency band, and time consumed in a whole process of searching for a millimeter-wave transmit beam can be reduced.

Compared with an existing manner of searching for a millimeter-wave transmit beam, in this application, time consumed for searching for a millimeter-wave transmit beam can be reduced through coordination between the high frequency band and the low frequency band, and a dedicated control signal mode (for example, the foregoing control PHY mode) does not need to be used. This can simplify a protocol and a specific implementation.

It should be noted that (a) in FIG. 6 is described by using an example in which the STA sends the one NDP to the AP in the high frequency band, but a scenario in which the STA sends the N NDPs (N≥2) to the AP in the high frequency band is not limited. For details, refer to (b) in FIG. 6. Content shown in (b) in FIG. 6 is basically consistent with the content shown in (a) in FIG. 6 (a difference between the two lies in whether the STA sends the one NDP or the N NDPs to the AP in the high frequency band). For brevity of description, the content shown in (b) in FIG. 6 is not described herein.

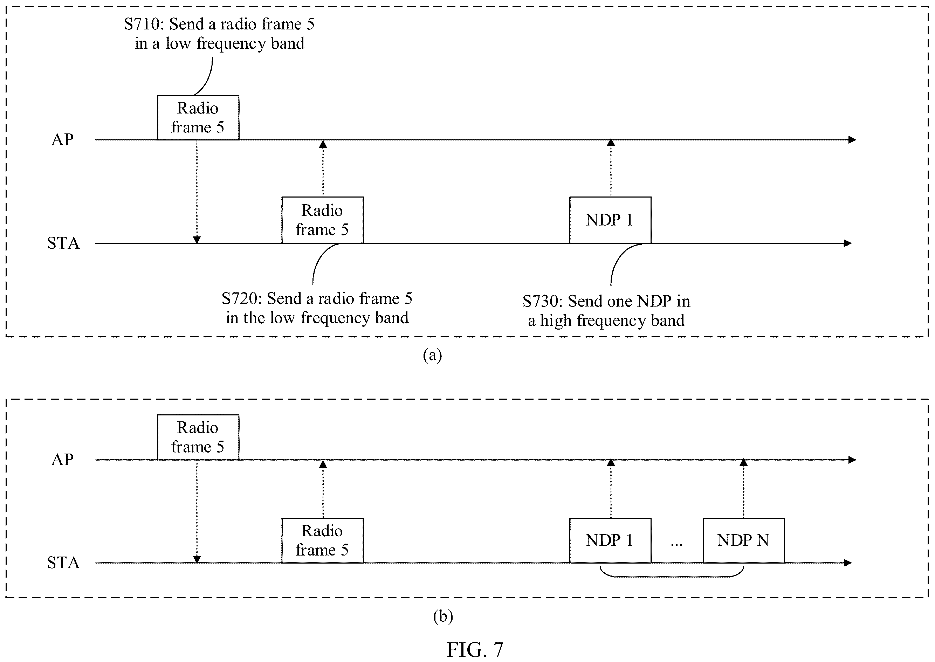

FIG. 7 is a schematic interaction flowchart of a beam management method 700 according to an embodiment of this application. A procedure of the method in FIG. 7 may be performed by an AP and a STA, or may be performed by modules and/or components (for example, chips or integrated circuits) that are installed in the AP and the STA and that have corresponding functions. This is not limited. The following uses the AP and the STA as an example for description. As shown in (a) in FIG. 7, the method 700 includes the following steps.

S710: The AP sends a radio frame 5 to the STA in a low frequency band.

Correspondingly, the STA receives the radio frame 5 from the AP in the low frequency band. Specifically, the radio frame 5 sent by the AP may be used to request the STA to perform searching of a millimeter-wave receive beam on an AP side.

S720: The STA sends a radio frame 5 to the AP in the low frequency band.

Correspondingly, the AP receives the radio frame 5 from the STA in the low frequency band. Specifically, the radio frame 5 sent by the STA may be used to confirm the radio frame 5 in S710, that is, may indicate, to the AP, that the STA performs searching of the millimeter-wave receive beam on the AP side.

S730: The STA sends one NDP to the AP in a high frequency band.

Correspondingly, the AP receives the one NDP from the STA in the high frequency band. One NDP may correspond to a plurality of millimeter-wave receive beams, that is, one millimeter-wave receive beam corresponds to k LTF symbols in one NDP.

Optionally, in S730, the STA may alternatively send N (N≥2) NDPs to the AP in the high frequency band, and each NDP corresponds to one millimeter-wave receive beam. For this scenario, refer to descriptions of an example in (b) in FIG. 7. Details are not described herein.

According to the foregoing solution, in this application, signaling interaction in the low frequency band can assist in searching for a millimeter-wave receive beam in the high frequency band. In this way, searching for a millimeter-wave receive beam can be performed in a communication scenario with a low frequency band and a high frequency band, and time consumed in a whole process of searching for a millimeter-wave receive beam can be reduced.

Compared with an existing manner of searching for a millimeter-wave receive beam, in this application, time consumed for searching for a millimeter-wave receive beam can be reduced through coordination between the high frequency band and the low frequency band, and a dedicated control signal mode (for example, the foregoing control PHY mode) does not need to be used. This can simplify a protocol and a specific implementation.

It may be understood that the method 700 is described by using an example in which searching for a millimeter-wave receive beam on the AP side is completed. However, the method 700 is also applicable to searching for a millimeter-wave receive beam on a STA side. Details are not described herein.

It should be noted that (a) in FIG. 7 is described by using an example in which the STA sends the one NDP to the AP in the high frequency band, but a scenario in which the STA sends the N NDPs (N≥2) to the AP in the high frequency band is not limited. For details, refer to (b) in FIG. 7. Content shown in (b) in FIG. 7 is basically consistent with the content shown in (a) in FIG. 7 (a difference between the two lies in whether the STA sends the one NDP or the N NDPs to the AP in the high frequency band). For brevity of description, the content shown in (b) in FIG. 7 is not described herein.

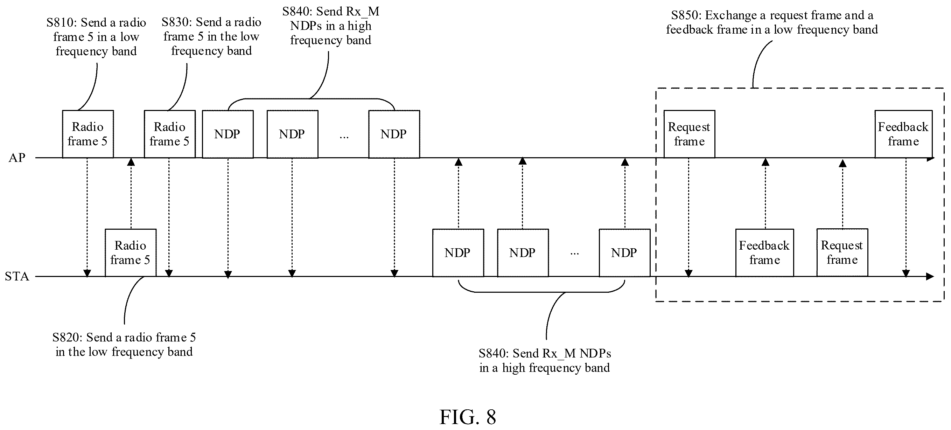

FIG. 8 is a schematic interaction flowchart of a beam management method 800 according to an embodiment of this application. A procedure of the method in FIG. 8 may be performed by an AP and a STA, or may be performed by modules and/or components (for example, chips or integrated circuits) that are installed in the AP and the STA and that have corresponding functions. This is not limited. The following uses the AP and the STA as an example for description. As shown in (a) in FIG. 8, the method 800 includes the following steps.

S810: The AP sends a radio frame 5 to the STA in a low frequency band.

Correspondingly, the STA receives the radio frame 5 from the AP in the low frequency band. Specifically, the radio frame 5 sent by the AP may be used to request the STA to perform millimeter-wave beam combined training. Further, the radio frame 5 may further indicate a number Tx_N of millimeter-wave transmit beams and a number Rx_N of millimeter-wave receive beams on an AP side.

S820: The STA sends a radio frame 5 to the AP in the low frequency band.

Correspondingly, the AP receives the radio frame 5 from the STA in the low frequency band. Specifically, the radio frame 5 sent by the STA may be used to confirm the radio frame 5 in S810, that is, indicate, to the AP, that the STA performs the millimeter-wave beam combined training. Further, the radio frame 5 sent by the STA may also be used to request the AP to perform the millimeter-wave beam combined training. Further, the radio frame 5 may further indicate a number Tx_M of millimeter-wave transmit beams and a number Rx_M of millimeter-wave receive beams on a STA side.

S830: The AP sends a radio frame 5 to the STA in the low frequency band.

Correspondingly, the STA receives the radio frame 5 from the AP in the low frequency band. Specifically, the radio frame 5 in S830 may be used to confirm the radio frame 5 in S820, that is, the AP agrees to the millimeter-wave beam combined training on the STA side.

S840: The AP sends Rx_M NDPs in a high frequency band, where each NDP is used to measure the Tx_N transmit beams; and the STA sends Rx_N NDPs in a high frequency band, where each NDP is used to measure the Tx_M transmit beams.

Correspondingly, the STA may receive a part or all of the Rx_M NDPs from the AP, and the AP may also receive a part or all of the Rx_M NDPs from the STA.

S850: The AP and the STA exchange a request frame and a feedback frame in a low frequency band.

Specifically, the AP sends a request frame to the STA in the low frequency band, and the request frame is used to request the STA to feed back an index of a millimeter-wave transmit beam received by the STA. Correspondingly, the STA sends a feedback frame to the AP in the low frequency band, and the feedback frame is used to feed back, to the AP, the index of the millimeter-wave transmit beam received by the STA. In addition, the STA sends a request frame to the AP in the low frequency band, and the request frame is used to request the AP to feed back an index of a millimeter-wave transmit beam received by the AP. Correspondingly, the AP sends a feedback frame to the STA in the low frequency band, and the feedback frame is used to feed back, to the STA, the index of the millimeter-wave transmit beam received by the AP. For a manner in which the AP feeds back the index of the millimeter-wave beam to the STA, refer to the foregoing descriptions of S240. For a manner in which the STA feeds back the index of the millimeter-wave beam to the AP, also refer to the foregoing descriptions. Details are not described herein again.

In a possible implementation, in S840, the AP may send Rx_M*Tx_N NDPs to the STA in a high frequency band, where each NDP is used to measure one millimeter-wave beam; and the STA may send Rx_N*Tx_M NDPs to the AP in a high frequency band, where each NDP is used to measure one millimeter-wave beam.

According to the foregoing solution, in this application, signaling interaction in the low frequency band can assist in the millimeter-wave beam combined training in the high frequency band. In this way, millimeter-wave beam combined training can be performed in a communication scenario with a low frequency band and a high frequency band, and time consumed in a whole process of millimeter-wave beam combined training can be reduced.

It may be understood that the method 800 is described by using an example in which the millimeter-wave beam combined training on the AP side is completed. However, the method 800 is also applicable to the millimeter-wave beam combined training on the STA side. Details are not described herein.

The foregoing describes the method embodiments in embodiments of this application, and the following describes corresponding apparatus embodiments.

To implement various functions in the foregoing methods provided in this application, a terminal and a network device each may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

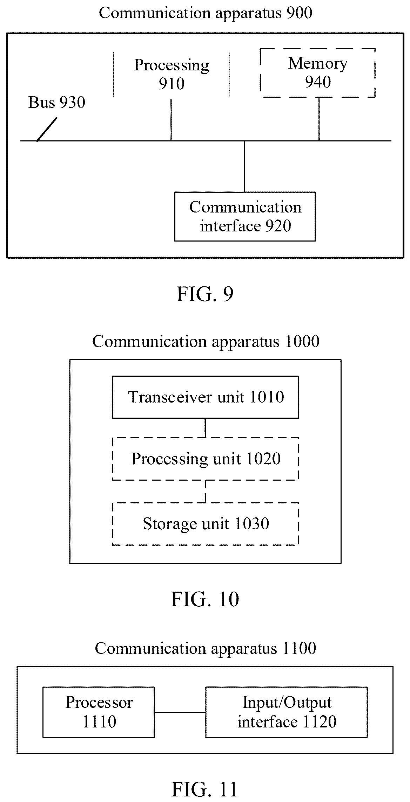

FIG. 9 is a block diagram of a communication apparatus 900 according to an embodiment of this application. The communication apparatus 900 includes a processor 910 and a communication interface 920. The processor 910 and the communication interface 920 may be connected to each other through a bus 930. The communication apparatus 900 may be configured to implement a function of an AP, or may be configured to implement a function of a STA.

Optionally, the communication apparatus 900 further includes a memory 940.

The memory 940 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory is any other medium that can carry or store expected program code in a form of an instruction or a data structure and that can be accessed by a computer, but is not limited thereto. For example, the memory 9009000 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and can implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware and a software module in the processor. For example, the processor 910 may be one or more central processing units (central processing units, CPUs). When the processor 910 is one CPU, the CPU may be a single-core CPU, or may be a multi-core CPU.

When the communication apparatus 900 is configured to implement the function of the AP, for example, the processor 910 is configured to perform the following operations: sending an NDPA frame to a STA in a low frequency band; and sending an NDP and the like to the STA in a high frequency band.

The foregoing content is merely used as an example for description. When the communication apparatus 900 is configured to implement the function of the AP, the communication apparatus 900 is responsible for performing the AP-related methods or steps in the foregoing method embodiments.

When the communication apparatus 900 is configured to implement the function of the STA, for example, the processor 910 is configured to perform the following operations: receiving an NDPA frame from an AP in a low frequency band; and receiving an NDP and the like from the AP in a high frequency band.

The foregoing content is merely used as an example for description. When the communication apparatus 900 is configured to implement the function of the STA, the communication apparatus 900 is responsible for performing the STA-related methods or steps in the foregoing method embodiments.

The foregoing descriptions are merely an example for description. For specific content, refer to the content shown in the foregoing method embodiments. In addition, for implementation of each operation in FIG. 9, refer to corresponding descriptions of the method embodiments shown in FIG. 2 to FIG. 8.

FIG. 10 is a block diagram of a communication apparatus 1000 according to an embodiment of this application. The communication apparatus 1000 may be the AP or STA in the foregoing embodiments, or may be a chip or module in the AP or STA, and is configured to implement the methods in the foregoing embodiments. The communication apparatus 1000 includes a transceiver unit 1010. The following describes the transceiver unit 1010 by using an example.

The transceiver unit 1010 may include a sending unit and a receiving unit that are respectively configured to implement a sending function or a receiving function in the foregoing method embodiments. The transceiver unit 1010 may further include a processing unit configured to implement a function other than the sending or receiving function.

When the communication apparatus 1000 is configured to implement a function of the AP, for example, the transceiver unit 1010 is configured to send an NDPA frame to a STA in a low frequency band. The transceiver unit 1010 is further configured to send an NDP and the like to the STA in a high frequency band.

Optionally, the communication apparatus further includes a processing unit 1020, configured to perform the method or the step related to an operation like processing in the foregoing method embodiments.

Optionally, the communication apparatus 1000 further includes a storage unit 1030. The storage unit 1030 is configured to store a program or code used to perform the foregoing methods.

The foregoing content is merely used as an example for description. When the communication apparatus 1000 is configured to implement the function of the AP, the communication apparatus 1000 is responsible for performing the AP-related methods or steps in the foregoing method embodiments.

The communication apparatus 1000 is the STA. For example, the transceiver unit 1010 is configured to receive the NDPA frame from the AP in the low frequency band. The transceiver unit 1010 is further configured to receive the NDP and the like from the AP in the high frequency band.

Optionally, the communication apparatus further includes a processing unit 1020, configured to perform the method or the step related to an operation like processing in the foregoing method embodiments.

Optionally, the communication apparatus 1000 further includes a storage unit 1030. The storage unit 1030 is configured to store a program or code used to perform the foregoing methods.

The foregoing content is merely used as an example for description. When the communication apparatus 1000 is configured to implement the function of the STA, the communication apparatus 1000 is responsible for performing the STA-related methods or steps in the foregoing method embodiments.

In addition, for implementation of each operation in FIG. 10, refer to corresponding descriptions of the content shown in the foregoing method embodiments. Details are not described herein again.

The communication apparatuses shown in FIG. 9 and FIG. 10 are configured to implement the content described in the foregoing method embodiments. Therefore, for specific execution steps and methods of the communication apparatuses shown in FIG. 9 and FIG. 10, refer to the content described in the foregoing method embodiments.

It should be understood that the foregoing transceiver unit may include the sending unit and the receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. This is described herein once for all, and details are not described below again.

FIG. 11 is a diagram of a communication apparatus 1100 according to an embodiment of this application. The communication apparatus 1100 may be configured to implement a function of the AP or the STA in the foregoing methods. The communication apparatus 1100 may be a chip in the AP or STA. The communication apparatus 1100 includes an input/output interface 1120 and a processor 1110. The input/output interface 1120 may be an input/output circuit. The processor 1110 may be a signal processor, a chip, or another integrated circuit that can implement the methods in this application. The input/output interface 1120 is configured to input or output a signal or data.

For example, the communication apparatus 1100 is the AP, and the input/output interface 1120 is configured to send an NDPA frame to a STA in a low frequency band. The input/output interface 1120 is further configured to send an NDP and the like to the STA in a high frequency band. The processor 1110 is configured to process a radio frame 4 and the like from the STA. The processor 1110 is further configured to perform a part or all of steps of any method provided in this application.

For example, the communication apparatus 1100 is the STA, and the input/output interface 1120 is configured to receive an NDPA frame from the AP in a low frequency band. The input/output interface 1120 is further configured to receive an NDP and the like from the AP in a high frequency band. The processor 1110 is configured to perform a part or all of steps of any method provided in this application.

In a possible implementation, the processor 1110 executes instructions stored in a memory, to implement the function implemented by the AP or the STA.

Optionally, the communication apparatus 1100 further includes the memory. Optionally, the processor and the memory are integrated together. Optionally, the memory is outside the communication apparatus 1100.

In a possible implementation, the processor 1110 may be a logic circuit, and the processor 1110 inputs/outputs a message or signaling through the input/output interface 1120. The logic circuit may be a signal processor, a chip, or another integrated circuit that can implement the methods in embodiments of this application.

The foregoing descriptions of the communication apparatus 1100 in FIG. 11 are merely an example for description. The communication apparatus 1100 can be configured to perform the methods in the foregoing embodiments. For specific content, refer to the descriptions in the foregoing method embodiments. Details are not described herein again.

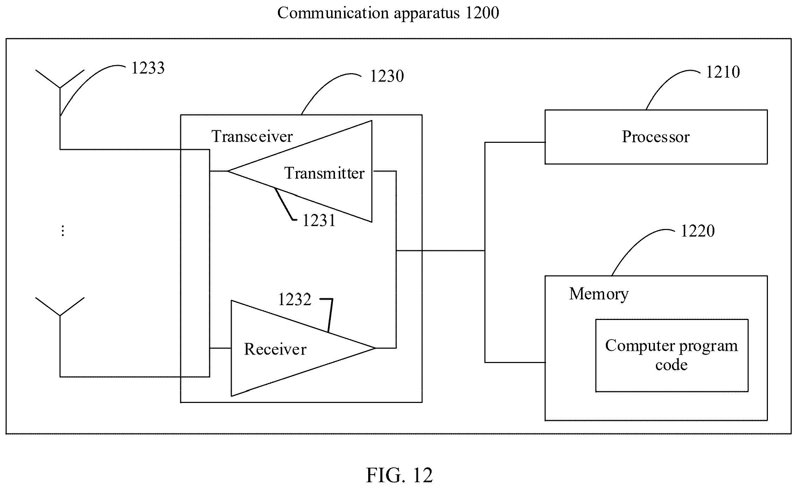

FIG. 12 is a block diagram of a communication apparatus 1200 according to an embodiment of this application. The communication apparatus 1200 may be an AP or a chip. The communication apparatus 1200 may be configured to perform an operation performed by the AP in the foregoing method embodiments.

When the communication apparatus 1200 is the AP, for example, a base station, FIG. 12 is a simplified diagram of a structure of the base station. The base station includes a part 1210, a part 1220, and a part 1230. The part 1210 is mainly configured to: perform baseband processing, control the base station, and the like. The part 1210 is usually a control center of the base station, may be usually referred to as a processor, and is configured to control the base station to perform a processing operation on a network device side in the foregoing method embodiments. The part 1220 is mainly configured to store computer program code and data. The part 1230 is mainly configured to: receive or send a radio frequency signal, and perform conversion between the radio frequency signal and a baseband signal. The part 1230 may be usually referred to as a transceiver module, a transceiver device, a transceiver circuit, a transceiver, or the like. The transceiver module in the part 1230 may also be referred to as a transceiver device, a transceiver, or the like, and includes an antenna 1233 and a radio frequency circuit (not shown in FIG. 12). The radio frequency circuit is mainly configured to perform radio frequency processing. Optionally, in the part 1230, a component configured to implement a receiving function may be considered as a receiver, and a component configured to implement a sending function may be considered as a transmitter. In other words, the part 1230 includes a receiver 1232 and a transmitter 1231. The receiver may also be referred to as a receiving module, a receiver device, a receiver circuit, or the like, and the transmitter may be referred to as a transmitting module, a transmitter, a transmitter circuit, or the like.

The part 1210 and the part 1220 may include one or more boards, and each board may include one or more processors and one or more memories. The processor is configured to read and execute a program in the memory, to implement a baseband processing function and control the base station. If there are a plurality of boards, the boards may be interconnected to improve a processing capability. In an optional implementation, the plurality of boards may share one or more processors, or the plurality of boards share one or more memories, or the plurality of boards share one or more processors at the same time.

In an implementation, the transceiver module in the part 1230 is configured to perform a receiving and sending-related process performed by a network device in the embodiments shown in FIG. 2 to FIG. 8. The processor in the part 1210 is configured to perform a processing-related process performed by the network device in the embodiments shown in FIG. 2 to FIG. 8.

In another implementation, the processor in the part 1210 is configured to perform a processing-related process performed by a communication device in the embodiments shown in FIG. 2 to FIG. 8.

In another implementation, the transceiver module in the part 1230 is configured to perform a receiving and sending-related process performed by a communication device in the embodiments shown in FIG. 2 to FIG. 8.

It should be understood that FIG. 12 is merely an example rather than a limitation. The network device including the processor, the memory, and the transceiver may not depend on the structures shown in FIG. 9 to FIG. 11.

When the communication apparatus 1200 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

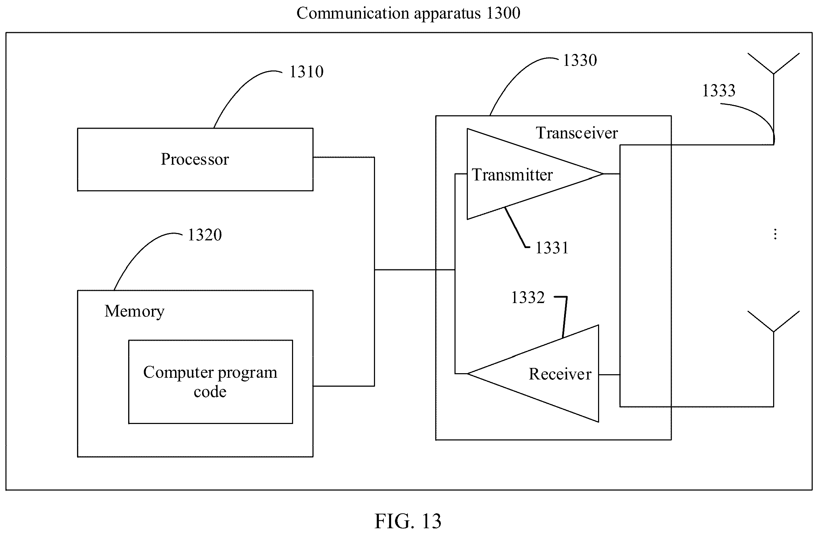

FIG. 13 is a block diagram of a communication apparatus 1300 according to an embodiment of this application. The communication apparatus 1300 may be a STA, a processor of the STA, or a chip. The communication apparatus 1300 may be configured to perform an operation performed by the STA in the foregoing method embodiments.

When the communication apparatus 1300 is the STA, FIG. 13 is a simplified diagram of a structure of a STA (which is a terminal device). As shown in FIG. 13, the STA includes the processor, a memory, and a transceiver. The memory may store computer program code. The transceiver includes a transmitter 531, a receiver 532, a radio frequency circuit (not shown in FIG. 13), an antenna 533, and an input/output apparatus (not shown in FIG. 13).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 5 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 13, the terminal device includes a processor 1310, a memory 1320, and a transceiver 1330. The processor 1310 may also be referred to as a processing unit, a processing board, a processing module, a processing apparatus, or the like. The transceiver 530 may also be referred to as a transceiver unit, a transceiver device, a transceiver apparatus, or the like.

Optionally, in the transceiver 1330, a component configured to implement a receiving function may be considered as a receiving module, and in the transceiver 530, a component configured to implement a sending function may be considered as a sending module. In other words, the transceiver 1330 includes a receiver and a transmitter. The transceiver may also be sometimes referred to as a transceiver device, a transceiver module, a transceiver circuit, or the like. The receiver may also be sometimes referred to as a receiver device, a receiving module, a receiver circuit, or the like. The transmitter may also be sometimes referred to as a transmitter device, a transmitting module, a transmitter circuit, or the like.

For example, in an implementation, the processor 1310 is configured to perform a processing action on a STA side in the embodiments shown in FIG. 2 to FIG. 8, and the transceiver 1330 is configured to perform receiving and sending actions on the STA side in FIG. 2 to FIG. 8.

For example, in an implementation, the processor 510 is configured to perform a processing action on a terminal device side in the embodiments shown in FIG. 2 to FIG. 8, and the transceiver 1330 is configured to perform receiving and sending actions on the STA side in FIG. 2 to FIG. 8.

It should be understood that FIG. 13 is merely an example rather than a limitation. The terminal device including the transceiver module and the processing module may not depend on the structures shown in FIG. 11 and FIG. 12.

When the communication apparatus 1300 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke, from a memory, and run instructions stored in the memory, for a communication device in which the chip is installed to perform the methods in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the methods in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

In the descriptions of embodiments of this application, unless otherwise specified, "a plurality of" means two or more. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, words such as "example" or "for example" are used to represent an example, an illustration, or a description.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be another division manner during actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device, an access network device, or a core network device may perform a part or all of the steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application may be performed.

## Claims

1. A beam management method, comprising:
sending, by a first communication apparatus, a first radio frame to a second communication apparatus in a first frequency band, wherein the first radio frame indicates that searching for a millimeter-wave transmit beam is about to start;
sending, by the first communication apparatus, a second radio frame to the second communication apparatus in a second frequency band, wherein the second radio frame is used for searching for the millimeter-wave transmit beam; and
sending, by the first communication apparatus, a third radio frame to the second communication apparatus in the first frequency band, wherein the third radio frame indicates the second communication apparatus to feed back an index of a received millimeter-wave transmit beam, wherein
the first frequency band is less than the second frequency band.

2. The method according to claim 1, wherein the method further comprises:
receiving, by the first communication apparatus, a fourth radio frame from the second communication apparatus in the first frequency band, wherein the fourth radio frame comprises the index of the received millimeter-wave transmit beam.

3. The method according to claim 1 or 2, wherein the method further comprises:
sending, by the first communication apparatus, a fifth radio frame to the second communication apparatus in the first frequency band, wherein the fifth radio frame is used to request to perform searching of a millimeter-wave receive beam, and the fifth radio frame further indicates a number of millimeter-wave receive beams;
receiving, by the first communication apparatus, the fifth radio frame from the second communication apparatus in the first frequency band, wherein the fifth radio frame further indicates to perform searching of the millimeter-wave receive beam; and
receiving, by the first communication apparatus, the second radio frame from the second communication apparatus in the second frequency band, wherein the second radio frame is further used for searching for the millimeter-wave receive beam.

4. The method according to claim 3, wherein
the fifth radio frame is further used to request to perform millimeter-wave beam combined training, and the fifth radio frame further indicates a number of millimeter-wave transmit beams and a number of millimeter-wave receive beams in the combined training.

5. The method according to claim 4, wherein the fifth radio frame further indicates to perform the millimeter-wave beam combined training.

6. The method according to any one of claims 1 to 5, wherein
the first radio frame comprises a null data physical protocol data unit announcement NDPA, an application identifier AID field in the NDPA comprises a first value, and the first value indicates that searching for the millimeter-wave transmit beam is about to start.

7. The method according to any one of claims 1 to 6, wherein
the second radio frame comprises a null data physical protocol data unit NDP, the NDP comprises a beam index field, and the beam index field indicates an index of a millimeter-wave transmit beam.

8. The method according to claim 7, wherein the NDP further comprises at least one of the following:
a bandwidth field, a partial AID field, a number of symbols field of a long training field, a number of millimeter-wave transmit beams field, a cyclic redundancy check code field, or a number of remaining to-be-sent millimeter-wave beams field.

9. The method according to any one of claims 3 to 8, wherein the fifth radio frame comprises at least one of the following:
a millimeter-wave receive beam training request field, a millimeter-wave receive beam training confirm field, a millimeter-wave beam combined training request field, a millimeter-wave beam combined training confirm field, a number of to-be-trained millimeter-wave receive beams field, or a number of to-be-trained millimeter-wave transmit beams field.

10. A beam management method, comprising:
receiving, by a second communication apparatus, a first radio frame from a first communication apparatus in a first frequency band, wherein the first radio frame indicates that searching for a millimeter-wave transmit beam is about to start;
receiving, by the second communication apparatus, a second radio frame from the first communication apparatus in a second frequency band, wherein the second radio frame is used for searching for the millimeter-wave transmit beam; and
receiving, by the second communication apparatus, a third radio frame from the first communication apparatus in the first frequency band, wherein the third radio frame indicates the second communication apparatus to feed back an index of a received millimeter-wave transmit beam, wherein
the first frequency band is less than the second frequency band.

11. The method according to claim 10, wherein the method further comprises:
sending, by the second communication apparatus, a fourth radio frame to the first communication apparatus in the first frequency band, wherein the fourth radio frame comprises the index of the received millimeter-wave transmit beam.

12. The method according to claim 10 or 11, wherein the method further comprises:
receiving, by the second communication apparatus, a fifth radio frame from the first communication apparatus in the first frequency band, wherein the fifth radio frame is used to request to perform searching of a millimeter-wave receive beam, and the fifth radio frame further indicates a number of millimeter-wave receive beams;
sending, by the second communication apparatus, the fifth radio frame to the first communication apparatus in the first frequency band, wherein the fifth radio frame further indicates to perform searching of the millimeter-wave receive beam; and
sending, by the second communication apparatus, the second radio frame to the first communication apparatus in the second frequency band, wherein the second radio frame is further used for searching for the millimeter-wave receive beam.

13. The method according to claim 12, wherein
the fifth radio frame is further used to request to perform millimeter-wave beam combined training, and the fifth radio frame further indicates a number of millimeter-wave transmit beams and a number of millimeter-wave receive beams in the combined training.

14. The method according to claim 13, wherein the fifth radio frame further indicates to perform the millimeter-wave beam combined training.

15. The method according to any one of claims 10 to 14, wherein
the first radio frame comprises a null data physical protocol data unit announcement NDPA, an application identifier AID field in the NDPA comprises a first value, and the first value indicates that searching for the millimeter-wave transmit beam is about to start.

16. The method according to any one of claims 10 to 15, wherein
the second radio frame comprises a null data physical protocol data unit NDP, the NDP comprises a beam index field, and the beam index field indicates an index of a millimeter-wave transmit beam.

17. The method according to claim 16, wherein the NDP further comprises at least one of the following:
a bandwidth field, a partial AID field, a number of symbols field of a long training field, a number of millimeter-wave transmit beams field, a cyclic redundancy check code field, or a number of remaining to-be-sent millimeter-wave beams field.

18. The method according to any one of claims 12 to 17, wherein the fifth radio frame comprises at least one of the following:
a millimeter-wave receive beam training request field, a millimeter-wave receive beam training confirm field, a millimeter-wave beam combined training request field, a millimeter-wave beam combined training confirm field, a number of to-be-trained millimeter-wave receive beams field, or a number of to-be-trained millimeter-wave transmit beams field.

19. A communication apparatus, comprising a processor, wherein the processor is configured to enable, by executing a computer program or instructions or via a logic circuit, the communication apparatus to perform the method according to any one of claims 1 to 18.

20. The communication apparatus according to claim 19, wherein the communication apparatus further comprises a memory, and the memory is configured to store the computer program or the instructions.

21. The communication apparatus according to claim 19 or 20, wherein the communication apparatus further comprises a communication interface, and the communication interface is configured to input and/or output a signal.

22. A communication apparatus, comprising a logic circuit and an input/output interface, wherein the input/output interface is configured to input and/or output a signal, and
the logic circuit is configured to perform the method according to any one of claims 1 to 18.

23. A computer-readable storage medium, wherein the computer-readable storage medium stores a computer program or instructions, and
when the computer program or the instructions are run on a computer, the method according to any one of claims 1 to 18 is performed.

24. A computer program product, comprising instructions, wherein when the instructions are run on a computer, the method according to any one of claims 1 to 18 is performed.
